# EUROPÄISCHE PATENTSCHRIFT

(11) **EP 2 931 578 B1**
(45) Veröffentlichungstag und Bekanntmachung des Hinweises auf die Patenterteilung: **19.04.2017**
(21) Anmeldenummer: 13779784.1
(22) Anmeldetag: 14.10.2013
(51) Int. Cl.: B60T 8/26, B62M 7/02, B60W 10/04, B60W 10/184, B62J 27/00, B60W 10/06, B60W 10/18, B60W 30/02, B62K 11/00, G05D 1/08

(54) **VERFAHREN ZUR STABILISIERUNG EINES ZWEIRADS**
METHOD FOR STABILIZING A TWO-WHEELED VEHICLE
PROCÉDÉ DE STABILISATION D'UN DEUX-ROUES

(30) Priorität: 12.12.2012 DE 102012222884
(43) Veröffentlichungstag der Anmeldung: 21.10.2015
(73) Patentinhaber: Robert Bosch GmbH, 70442 Stuttgart (DE)
(72) Erfinder: LEMEJDA, Markus, 71642 Ludwigsburg (DE); KLEWS, Matthias, 72076 Tuebingen (DE)
(86) Internationale Anmeldenummer: PCT/EP2013/071415
(87) Internationale Veröffentlichungsnummer: WO 2014/090439

(56) Entgegenhaltungen:
- EP-A2- 2 233 388
- DE-A1- 10 247 991
- DE-A1-102008 011 577
- DE-A1-102010 003 951

## Beschreibung

Die Erfindung bezieht sich auf ein Verfahren zur Stabilisierung eines Zweirads nach dem Oberbegriff des Anspruches 1.

### Stand der Technik

Um mit einem Motorrad eine Kurve stabil durchfahren zu können, müssen die Geschwindigkeit, die Schräglage und der Lenkwinkel an den aktuellen Kurvenradius sowie die Straßen- und Witterungsverhältnisse angepasst sein, andernfalls besteht die Gefahr, dass das Motorrad übersteuert und das Hinterrad in der Kurve seitlich wegrutscht. Gerät das Motorrad in dieser Situation wieder auf einen Fahrbahnabschnitt mit höherem Reibwert, besteht die Gefahr eines Überschlags in die kurvenäußere Richtung, was mit einer erheblichen Verletzungsgefahr einhergeht.

Als Stabilisierungsmaßnahme wird in dem gattungsbildenden Dokument DE 10 2010 003 951 A1 vorgeschlagen, eine Fahrdynamikregelung in einem Motorrad durchzuführen, wenn der Schwimmwinkel oder die Schwimmwinkeländerung einen vorgegebenen Schwellenwert übersteigt. Der Schwimmwinkel wird auf der Basis sensorischer Daten zur Längsgeschwindigkeit, Querbeschleunigung, Wankrate und Gierrate sowie gegebenenfalls des Wank- und Nickwinkels bestimmt. Übersteigt der Schwimmwinkel den zugeordneten Schwellenwert, werden stabilisierende Maßnahmen ergriffen, insbesondere die Fahrzeuggeschwindigkeit durch Reduktion des Motormoments und Erhöhung des Bremsdrucks verringert.

### Offenbarung der Erfindung

Der Erfindung liegt die Aufgabe zugrunde, die Fahrsicherheit bei Zweirädern zu verbessern.

Diese Aufgabe wird erfindungsgemäße mit den Merkmalen des Anspruches 1 gelöst. Die Unteransprüche geben zweckmäßige Weiterbildungen an.

Mit dem erfindungsgemäßen Verfahren kann ein Zweirad stabilisiert werden, insbesondere ein Motorrad oder ein sonstiges, motorbetriebenes Zweirad, das sich in einer kritischen Fahrsituation befindet. Das Verfahren zur Stabilisierung wird vorzugsweise bei Kurvenfahrt des Zweirads angewandt. Kritische Fahrzustände können auftreten, wenn die aktuelle Fahrzeuggeschwindigkeit, der Lenkwinkel und/oder die Schräglage des Zweirads nicht an den Kurvenradius und die Straßen- und Witterungsverhältnisse angepasst sind. Bei überhöhter Kurvengeschwindigkeit, einer zu starken Geschwindigkeitsänderung durch Beschleunigen oder Abbremsen in Schräglage und bei Änderungen des Reibwerts zwischen Reifen und Straße können instabile Fahrsituationen auftreten, bei denen das Zweirad stark übersteuert und das Hinterrad in die kurvenäußere Richtung wegrutscht.

Um dieser Situation frühzeitig entgegenzuwirken, wird bei dem erfindungsgemäßen Verfahren mittels einer Sensorik im Zweirad ein drohender oder bereits eingetretener kritischer Fahrzustand detektiert, und es werden gegebenenfalls stabilisierende Gegenmaßnahmen ergriffen. Auf der Grundlage sensorischer Daten wird der Schwimmwinkel oder eine mit dem Schwimmwinkel korrelierende Fahrzustandsgröße ermittelt und mit einem zugeordneten Grenzwert verglichen. Überschreitet der Schwimmwinkel bzw. die hiermit korrelierende Fahrzustandsgröße den Grenzwert, wird als Gegenmaßnahme das Moment an mindestens einem Fahrzeugrad selbsttätig modifiziert. Dies betrifft einen selbsttätigen Bremseingriff am Vorderrad und/oder am Hinterrad mit einer Erhöhung, ggf. einer Reduzierung des Bremsmoments sowie einen Eingriff in das Motorantriebsmoment, welches am Hinterrad wirkt. In der Regel wird das Motorantriebsmoment verringert, um gegebenenfalls zusätzlich zum Bremseingriff eine Geschwindigkeitsreduzierung zu erreichen. Unter Umständen kann es aber auch zweckmäßig sein, zur Stabilisierung des Zweirads das Motorantriebsmoment zu erhöhen. Der Eingriff in das Motorantriebsmoment erfolgt ebenso wie der Bremseingriff in selbsttätiger Weise, so dass grundsätzlich keine stabilisierende Verhaltensmaßnahme seitens des Fahrers erforderlich ist.

Der selbsttätige Eingriff wird dem fahrerseitigen Eingriff überlagert, so dass ein resultierender Wert eingestellt wird, der zur Stabilisierung des Zweirades beiträgt. Hierbei kann es ggf. auch angezeigt sein, einen zu starken Bremseingriff durch den Fahrer durch den selbsttätigen Eingriff in das Bremssystem des Fahrzeugs zu verringern. Der Eingriff erfolgt alternativ oder kumulativ in die Vorderradbremse, die Hinterradbremse und/oder den Antriebsmotor.

Vorteilhafterweise wird der aktuelle Schwimmwinkel im Zweirad bestimmt und mit einem zugeordneten Grenzwert verglichen. Grundsätzlich möglich ist es aber auch, anstelle des Schwimmwinkels als Regelgröße eine hiermit korrelierende Fahrzustandsgröße zu ermitteln und mit einem zugeordneten Grenzwert zu vergleichen, insbesondere den Schräglaufwinkel, wobei die korrelierende Fahrzustandsgröße in entsprechender Weise wie der Schwimmwinkel entweder unmittelbar sensorisch gemessen oder aus Messwerten bestimmt wird.

Bei dem erfindungsgemäßen Verfahren wird der Grenzwert in Abhängigkeit mindestens einer weiteren, aktuellen Fahrzustandsgröße bestimmt. Der Grenzwert ist somit kein feststehender, konstanter Wert, sondern wird vielmehr fahrsituationsabhängig festgelegt. Dies hat den Vorteil, dass aufgrund der besseren Anpassung an den aktuellen Fahrzustand eine präzisere, feinfühligere Regelung und damit eine bessere Stabilisierung des Zweirads möglich ist. Als Fahrzustandsgröße, welche in die Bestimmung des Grenzwertes eingeht, kommt beispielsweise die aktuelle Zweiradgeschwindigkeit in Betracht, die als Messwert zur Verfügung steht. Es ist aber auch möglich, sonstige Fahrzustandsgrößen bei der Bestimmung des Grenzwerts zu berücksichtigen, soweit die Fahrzustandsgrößen einen fahrdynamischen Wert des Zweirads repräsentieren. Zum Beispiel kann auch eine querdynamische Zustandsgröße, beispielsweise die Fahrzeugquerbeschleunigung oder die Gierrate berücksichtigt werden.

Der Grenzwert hängt zumindest von einer Fahrzustandsgröße ab, welche nicht identisch ist mit der Regelgröße. Es sind Ausführungen möglich, bei denen zwei oder mehrere nicht mit der Regelgröße identische Fahrzustandsgrößen bei der Bestimmung des Grenzwertes berücksichtigt werden.

Gemäß einer weiteren zweckmäßigen Ausführung wird der Grenzwert fortlaufend in Abhängigkeit der Fahrzustandsgröße aktualisiert. Sobald die Regelgröße, also der Schwimmwinkel oder ein damit korrelierender Wert, den fahrzustandsabhängigen Grenzwert erreicht hat, beginnt die stabilisierende Regelung. Ab diesem Zeitpunkt kann der Grenzwert entweder weiterhin fortlaufend aktualisiert werden, indem die aktuelle Fahrzustandsgröße gemessen bzw. aus Messwerten ermittelt wird und der Grenzwert in Abhängigkeit dieses aktuellen Wertes berechnet wird. Dies hat den Vorteil, dass der Grenzwert, der die Regelschwelle darstellt, fortlaufend aktualisiert bzw. korrigiert wird, wobei mit zunehmender Stabilisierung die Regelschwelle herabgesetzt wird.

Möglich ist es aber auch, ab dem Zeitpunkt des Regelungsbeginns den Grenzwert konstant zu belassen, so dass der Grenzwert für die Dauer des stabilisierenden Eingriffs konstant bleibt.

Der stabilisierende Eingriff, also die Regelung, erfolgt so lange, bis der Schwimmwinkel bzw. der damit korrelierende Wert den zugeordneten Grenzwert unterschritten hat. Bei dem zu unterschreitenden Grenzwert handelt es sich entweder um den gleichen Grenzwert, bei dessen Überschreitung der stabilisierende Eingriff beginnt, oder, gemäß einer alternativen Ausführung, um einen abweichenden, insbesondere geringeren Grenzwert, der analog zum oberen Grenzwert bestimmt werden kann. Gemäß einer einfachen Ausführungsvariante wird der untere Grenzwert als Funktion des oberen Grenzwertes bestimmt.

Die aktuellen Zustandsgrößen werden aus einer im Zweirad mitgeführten Sensorik bestimmt. Bei den Zustandsgrößen, welche unmittelbar gemessen werden, handelt es sich zum Beispiel um mindestens eine Raddrehzahl des Zweirads, um die Längs- und/oder Querbeschleunigung, um die Gierrate, Wankwinkel bzw. die Wankrate und/oder den Nickwinkel des Zweirads.

Das Verfahren läuft in einem Regel- bzw. Steuergerät ab, das im Zweirad mitgeführt wird. In dem Regel- bzw. Steuergerät werden die Messsignale der Sensorik ausgewertet, und es wird abgefragt, ob der Schwimmwinkel bzw. der hiermit korrelierende Wert den zugeordneten, aktuell berechneten Grenzwert überschreitet. Ist dies der Fall, werden Aktoren im Zweirad mittels Stellsignalen des Regel- bzw. Steuergeräts zur Durchführung des stabilisierenden Eingriffs in geregelter Weise betätigt, insbesondere der Antriebsmotor des Zweirads und/oder die Vorderrad- bzw. Hinterradbremse betätigt.

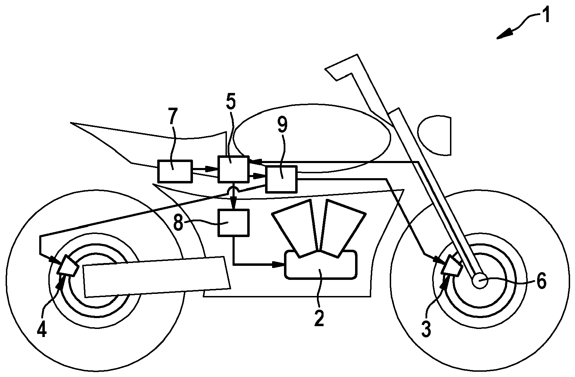

Weitere Vorteile und zweckmäßige Ausführungen sind den weiteren Ansprüchen, der Figurenbeschreibung und der Zeichnung zu entnehmen, in der ein Motorrad mit Regel- bzw. Steuergerät, Sensorik, Antriebsmotor und Radbremsen schematisch dargestellt ist.

In der Figur ist ein Motorrad 1 mit einem als Brennkraftmaschine ausgeführten Antriebsmotor 2 dargestellt. Schematisch eingetragen sind außerdem die Vorderradbremse 3 und die Hinterradbremse 4. Das Motorrad 1 ist mit einem Regel- bzw. Steuergerät 5 ausgestattet, des Weiteren ist am Vorderrad ein Raddrehzahlsensor 6 angeordnet, der ebenso wie Inertialsensoren 7 Bestandteil der Sensorik im Motorrad ist. Über die Inertialsensorik 7 können die Fahrzeuglängs- und Querbeschleunigung bestimmt werden, außerdem zweckmäßigerweise auch die Gierrate und die Wankrate. Das Motorrad 1 ist desweiteren mit einem Motor-Steuergerät 8 ausgestattet, über das das Motorantriebsmoment einstellbar ist, sowie mit einem Antiblockier (ABS) - Steuergerät 9 zur Ansteuerung der Vorderradbremse 3 und gegebenenfalls auch der Hinterradbremse 4. Das Regel- bzw. Steuergerät 5 kommuniziert mit der Sensorik sowie mit dem Motor-Steuergerät 8 und dem ABS-Steuergerät 9.

Um fahrkritische Situationen insbesondere bei Kurvenfahrt zu verhindern, wird aus der Sensorik 6, 7 fortlaufend der aktuelle Schwimmwinkel ermittelt und mit einem zugeordneten Grenzwert verglichen, wobei im Fall des Überschreitens des Grenzwertes eine fahrstabilisierende Regelung durch Eingriffe in den Antriebsmotor 2 und/oder die Radbremsen 3, 4 durchgeführt wird. Der Schwimmwinkel wird in an sich bekannter Weise aus längs- und querdynamischen Größen wie der Fahrzeuggeschwindigkeit, der Querbeschleunigung, der Gierrate, der Wankrate, dem Schräglagen- bzw. Wankwinkel und dem Nickwinkel ermittelt. Alternativ zur Berechnung des Schwimmwinkels ist auch eine Bestimmung des Schräglaufwinkels am Hinterrad möglich und der Vergleich mit einem zugeordneten Grenzwert.

Der Grenzwert wird als Funktion von mindestens einer aktuellen Fahrzustandsgröße bestimmt, insbesondere der aktuellen Zweiradgeschwindigkeit. Ergibt die Abfrage, dass der Schwimmwinkel den geschwindigkeitsabhängigen Grenzwert überschreitet, wird über das Regel- bzw. Steuergerät das Motor-Steuergerät 8 und/oder das ABS-Steuergerät 9 beeinflusst und in diesen Steuergeräten Stellsignale zur Einstellung des Antriebsmotors 2, der Vorderradbremse 3 und/oder der Hinterradbremse 4 erzeugt. Abhängig von der Differenz zwischen dem aktuellen Schwimmwinkel und dem zugeordneten Grenzwert erfolgt die Ansteuerung des Motors und der Radbremsen. Je größer die Differenz, desto stärker kann beispielsweise die Motordrosselklappe in Richtung Schließposition verstellt werden und gegebenenfalls zusätzlich der Bremsdruck erhöht werden, um die Fahrzeuggeschwindigkeit zu reduzieren.

Sobald der Schwimmwinkel den gegebenen Grenzwert wieder unterschreitet, können die Eingriffe in den Antriebsmotor und die Radbremsen wieder beendet werden. Der Grenzwert, welcher zum Beenden unterschritten werden muss, ist vorteilhafterweise identisch mit dem Grenzwert, bei dessen Überschreiten der stabilisierende Eingriff beginnt. Grundsätzlich können aber die Grenzwerte auch auseinanderfallen, wobei der Beendigungs-Grenzwert niedriger ist als der Grenzwert zum Beginnen des Eingriffs.

## Patentansprüche

1. Verfahren zur Stabilisierung eines Zweirads (1), bei dem der aktuelle Schwimmwinkel oder eine mit dem Schwimmwinkel korrelierende Fahrzustandsgröße ermittelt und bei Überschreitung eines zugeordneten Grenzwerts das Moment an mindestens einem Fahrzeugrad selbsttätig modifiziert wird, **dadurch gekennzeichnet, dass** der Grenzwert in Abhängigkeit mindestens einer aktuellen Fahrzustandsgröße bestimmt wird.

2. Verfahren nach Anspruch 1, **dadurch gekennzeichnet, dass** der Grenzwert von der aktuellen Zweiradgeschwindigkeit abhängt.

3. Verfahren nach Anspruch 1 oder 2, **dadurch gekennzeichnet, dass** bei Überschreitung des Grenzwerts die Geschwindigkeit reduziert wird.

4. Verfahren nach Anspruch 3, **dadurch gekennzeichnet, dass** zur Reduzierung der Geschwindigkeit das Motorantriebsmoment reduziert wird.

5. Verfahren nach Anspruch 3 oder 4, **dadurch gekennzeichnet, dass** zur Reduzierung der Geschwindigkeit das Vorderrad abgebremst wird.

6. Verfahren nach einem der Ansprüche 1 bis 5, **dadurch gekennzeichnet, dass** der Grenzwert fortlaufend in Abhängigkeit der aktuellen Fahrzustandsgröße aktualisiert wird.

7. Verfahren nach einem der Ansprüche 1 bis 5, **dadurch gekennzeichnet, dass** der Grenzwert für die Dauer des stabilisierenden Eingriffs konstant bleibt.

8. Verfahren nach einem der Ansprüche 1 bis 7, **dadurch gekennzeichnet, dass** als Fahrzustandsgrößen mindestens eine Raddrehzahl, die Längs- und Querbeschleunigung und die Gierrate sensiert werden.

9. Verfahren nach einem der Ansprüche 1 bis 8, **dadurch gekennzeichnet, dass** als Regelgröße der Schräglaufwinkel des Hinterrads bestimmt und mit einem zugeordneten Grenzwert verglichen wird.

10. Regel- bzw. Steuergerät (5) zur Durchführung des Verfahrens nach einem der Ansprüche 1 bis 9.

11. Fahrerassistenzsystem in einem Zweirad (1) mit einem Regel- bzw. Steuergerät (5) nach Anspruch 10.

## Claims

1. Method for stabilizing a two-wheeled vehicle (1), in which the current side-slip angle or a driving state variable correlating with the side-slip angle is determined and, if an associated limiting value is exceeded, the torque on at least one vehicle wheel is automatically modified, **characterized in that** the limiting value is determined as a function of at least one current driving state variable.

2. Method according to Claim 1, **characterized in that** the limiting value depends on the current two-wheeled vehicle speed.

3. Method according to Claim 1 or 2, **characterized in that** when the limiting value is exceeded, the speed is reduced.

4. Method according to Claim 3, **characterized in that** in order to reduce the speed, the engine drive torque is reduced.

5. Method according to Claim 3 or 4, **characterized in that** in order to reduce the speed, the front wheel is braked.

6. Method according to one of Claims 1 to 5, **characterized in that** the limiting value is updated continuously as a function of the current driving state variable.

7. Method according to one of Claims 1 to 5, **characterized in that** the limiting value remains constant for the duration of the stabilizing intervention.

8. Method according to one of Claims 1 to 7, **characterized in that** the driving state variables sensed are at least one wheel rotational speed, the longitudinal and transverse acceleration and the yaw rate.

9. Method according to one of Claims 1 to 8, **characterized in that** the slip angle of the rear wheel is determined as controlled variable and is compared with an associated limiting value.

10. Open-loop or closed-loop control device (5) for carrying out the method according to one of Claims 1 to 9.

11. Driver assistance system in a two-wheeled vehicle (1), having an open-loop or closed-loop control device (5) according to Claim 10.

## Revendications

1. Procédé de stabilisation d'un deux-roues (1), dans lequel on détermine l'angle d'attitude actuel ou une grandeur d'état de marche en corrélation avec l'angle d'attitude et en cas de dépassement d'une valeur limite associée on modifie automatiquement le couple à au moins une roue du véhicule, **caractérisé en ce que** l'on détermine la valeur limite en fonction d'au moins une grandeur d'état de marche actuelle.

2. Procédé selon la revendication 1, **caractérisé en ce que** la valeur limite dépend de la vitesse actuelle du deux-roues.

3. Procédé selon la revendication 1 ou 2, **caractérisé en ce qu'**en cas de dépassement de la valeur limite on réduit la vitesse.

4. Procédé selon la revendication 3, **caractérisé en ce que** l'on réduit le couple d'entraînement du moteur pour réduire la vitesse.

5. Procédé selon la revendication 3 ou 4, **caractérisé en ce que** l'on freine la roue avant pour réduire la vitesse.

6. Procédé selon l'une quelconque des revendications 1 à 5, **caractérisé en ce que** l'on actualise la valeur limite en continu en fonction de la grandeur d'état de marche actuelle.

7. Procédé selon l'une quelconque des revendications 1 à 5, **caractérisé en ce que** la valeur limite reste constante pendant la durée de l'intervention de stabilisation.

8. Procédé selon l'une quelconque des revendications 1 à 7, **caractérisé en ce que** l'on détecte comme grandeurs d'état de marche au moins une vitesse de rotation de roue, l'accélération longitudinale et transversale et le taux de lacet.

9. Procédé selon l'une quelconque des revendications 1 à 8, **caractérisé en ce que** l'on détermine comme grandeur de régulation l'angle de dérive de la roue arrière et on le compare avec une valeur limite associée.

10. Appareil de régulation ou de commande (5) pour la mise en oeuvre du procédé selon l'une quelconque des revendications 1 à 9.

11. Système d'assistance du conducteur dans un deux-roues (1) avec un appareil de régulation ou de commande (5) selon la revendication 10.
